# FASCICULE DE BREVET EUROPEEN

(11) **EP 0 786 309 B1**
(45) Date de publication et mention de la délivrance du brevet: **09.04.2003**
(21) Numéro de dépôt: 96810060.2
(22) Date de dépôt: 29.01.1996
(51) Int. Cl.: B24B 13/04, B24B 13/06, B23Q 5/28

(54) **Dispositif pour la fabrication de lentilles de contact**
Vorrichtung zum Herstellen von Kontaktlinsen
Device for the manufacture of contact lenses

(43) Date de publication de la demande: 30.07.1997
(73) Titulaire: Muller, Gérard, 1814 La Tour de Peilz (CH)
(72) Inventeur: Muller, Gérard, 1814 La Tour de Peilz (CH)
(74) Mandataire: AMMANN PATENTANWAELTE AG BERN

(56) Documents cités:
- EP-A- 0 042 023
- EP-A- 0 439 425
- EP-A- 0 479 025
- US-A- 5 152 202

## Description

L'invention a pour objet un dispositif pour la fabrication de lentilles de contact, en particulier de lentilles toriques, selon le préambule de la revendication indépendante.

Un tel dispositif est connu du brevet européen no. 0 439 425, ce dispositif de fabrication comprenant un dispositif de réglage comportant un actionneur piézo-électrique qui engendre un positionnement de l'outil de coupe pendant l'usinage. Ce dispositif de réglage à actionneur piézo-électrique est monté sur un chariot à déplacement linéaire, ce chariot pouvant se déplacer au moyen d'un actionneur piézo-électrique dans l'axe de la broche et le support de ce chariot pouvant se déplacer perpendiculairement à cet axe à l'aide d'un deuxième actionneur piézo-électrique.

On sait que pour une fréquence d'utilisation acceptable, env. 100 Hz, l'élongation d'un cristal piézo-électrique est limitée à environ 0,12 mm au maximum, ce qui nécessiterait pour la fabrication d'une lentille torique présentant des bosses de stabilisation, jusqu'à 0,4 mm de hauteur, un empilement de cristaux exigeant une énergie considérable ou une installation supplémentaire avec l'utilisation d'un bras de levier multiplicateur, lequel aurait de plus l'inconvénient de réduire la précision et surtout la rigidité du système. En plus, la construction selon le brevet cité emploie des cristaux piézo-électriques agissant sur une masse importante du chariot et du porte-outil, nécessitant des forces électriques considérables.

US-A-5 152 202 une machine pour le tournage de pièces cylindriques à haute vitesse, qui est pourvue d'un porte-outil pouvant effectuer un mouvement rapide de va-et-vient. L'outil de coupe se trouve sur un bras pivotant qui est commandé par un moteur linéaire. Cette machine est inapplicable et inutilisable pour la fabrication de lentilles à très haute précision et surtout de lentilles de toutes formes, notamment toriques.

Partant de cet état de la technique, le but de la présente invention est de réaliser un dispositif de fabrication de lentilles de contact permettant d'éviter les limitations citées supra (voir troisième paragraphe), avec une grande rigidité du système d'une part et une grande précision d'autre part, permettant ainsi de fabriquer des lentilles de contact avec des surfaces toriques ou autres formes non-sphériques, avec ou sans bosses de stabilisation. Ce but est atteint avec un dispositif selon la revendication indépendante.

L'invention sera expliquée en détail en se référant aux dessins ci-annexés présentant à titre d'exemple une forme d'exécution de l'objet de l'invention.
- La figure 1: montre en perspective et schématiquement le dispositif selon l'invention et
- la figure 2: est une vue en plan de dessus de la figure 1 avec, en plus, une broche et l'ébauche d'une lentille fixée au bout de la broche.

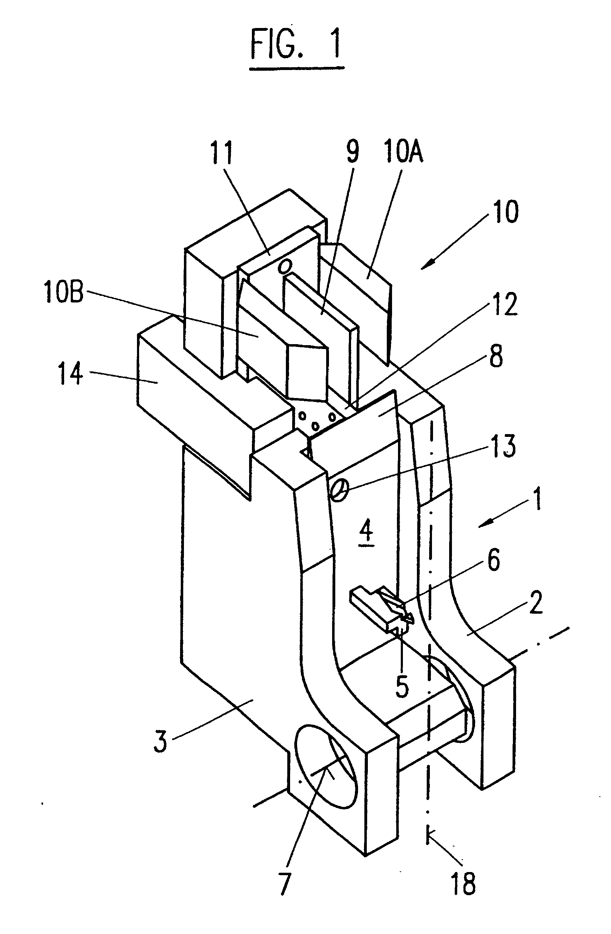

La figure 1 montre un support 1 pouvant être fixé sur un tour de précision à commande numérique remplaçant un outil traditionnel. Ce support 1 est agencé en forme de U, dont les deux ailes 2 et 3 entourent un levier. Sur ce levier 4 est fixé le porte-outil 5 avec l'outil de coupe 6. Le levier 4 est fixé au support 1 via un palier, dans la fig.1 en bas, au bout inférieur du levier 4. Ceci permet un mouvement de rotation du levier 4 par rapport au support 1, autour de l'axe de rotation 7.

A l'autre extrémité 8, le levier 4 comporte un aimant 9, dessiné schématiquement en forme d'une plaque, fixé de manière rigide par une traverse 12 au levier. Cet aimant se déplace entre deux bobines 10A et 10B, fixes par rapport au support 1. Dans cette exécution, l'aimant est mobile par rapport à la bobine 10 fixée au support et constitue donc un moteur dit "à aimant mobile". Mais il est évident que l'aimant, électro-aimant ou aimant permanent, peut être fixe et la bobine mobile, constituant un moteur de type "à bobine mobile". Il est évident que ni l'axe de rotation 7 ni le moteur électrique 10 doivent être forcément positionnés au deux extrémités du levier 4.

Il ressort de la figure 1 et de la description ci-dessus que l'aimant 9 ainsi que le levier 4 portant l'outil de coupe 6 sont mobiles par rapport au support 1. La bobine avec ses parties 10A et 10B est fixée au support 1 via une plaque de support 11. Le moteur formé par l'aimant 9 et les bobines 10A et 10B permet de mouvoir l'outil de coupe 6. Pour assurer le positionnement de l'outil de coupe 6 par rapport au support 1 par une régulation en boucle fermée, il est nécessaire d'avoir un capteur avec une partie immobile 14 fixé au support 1 et une partie mobile 13 fixée au levier 4. L'actionneur d'une part et le capteur d'autre part sont reliés à l'ordinateur de commande via des circuits électroniques adéquats. Ceci permet d'assurer un positionnement exact de l'outil de coupe.

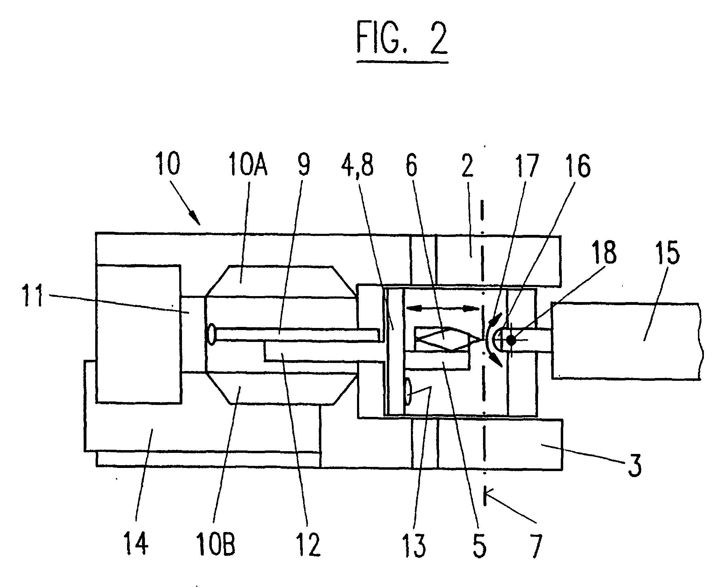

Dans l'exemple d'exécution selon les figures 1 et 2, la grandeur du déplacement de l'aimant mobile 9 est telle, que le porte-outil 5 peut être placé sur le levier 4 de telle manière, que le rapport - réducteur - entre le déplacement de l'aimant mobile 9 et le déplacement de la pointe de l'outil de coupe 6 est de 3:1. Cela veut dire, par exemple, qu'avec des courses "avant-arrière" de trois millimètres de l'aimant, l'outil de coupe effectue une course "avant-arrière" d'un millimètre, et cela avec une fréquence de plus de 200 Hz. Cette réduction du mouvement permet surtout d'augmenter la rigidité du système, tout en gardant la précision requise pour la fabrication de lentilles de contact sans polissage ultérieur des surfaces. Il est évident que ce rapport n'est pas obligatoire, et peut être de n'importe quelle grandeur. Avec un tel système, il est possible de bouger l'outil de coupe à des fréquences de plus de 200 Hz.

La figure 2 montre en plus le support 1 avec les éléments décrits, une broche 15 sur laquelle est fixée l'ébauche de lentille 16. Il est connu en soi de prévoir un capteur (non dessiné) sur la broche pour déterminer la position de celle-ci. Il ressort de la flèche 17, montrant le mouvement de la pointe de l'outil de coupe, que le support 1 peut pivoter autour d'un axe 18 polaire, vertical dans la présente exécution et perpendiculaire à l'axe de la broche, pour un usinage polaire. L'axe polaire 18 ne doit pas être nécessairement disposé verticalement et l'axe de la broche 15 ne doit pas être nécessairement disposé horizontalement.

Ce mouvement de rotation autour de l'axe polaire 18 est pris en considération par le calculateur grâce à un capteur, non dessiné. Tous les capteurs cités ci-dessus sont liés à l'ordinateur pour permettre le calcul de la position de l'outil de coupe 6 en fonction de l'angle de rotation de la broche, de la position du support 1 autour de l'axe 18 et de la géométrie désirée de la lentille de contact, par exemple torique, prismatique, etc.

Le dispositif se prête aussi à un usinage de type XY: dans ce cas, l'axe polaire 18 n'existe plus, et le mouvement du support est rectiligne, horizontal et perpendiculaire à l'axe de la broche.

Le dispositif selon l'invention permet l'usinage de lentilles de contact de
- toutes formes toriques internes ou externes,
- toutes formes prismatiques,
- toutes formes digitalisée,
- toutes formes non-sphériques,
ainsi que de toutes les lentilles de contact avec des bosses de stabilisation, du genre de celles décrites dans le brevet européen no. 0 042 023 du demandeur.

## Revendications

1. Dispositif pour la fabrication de lentilles de contact, en particulier lentilles de contact toriques, par usinage avec enlèvement de matière, comportant une broche (15), sur laquelle une ébauche de lentille (16) peut être fixée, et un outil de coupe (6) réglable par rapport à l'ébauche de lentille par un dispositif de réglage, **caractérisé en ce que** l'outil de coupe (6) est disposé sur un levier (4) articulé par rapport à un support (1) autour d'un axe de rotation (7), ce levier (4) comportant une partie du dispositif de réglage comprenant un moteur électrique avec une bobine électrique (10) agissant sur un aimant (9), de sorte à créer un déplacement relatif de ces deux organes (9, 10) l'un par rapport à l'autre et avec cela un déplacement de l'outil de coupe (6), soit l'aimant (9), soit la bobine électrique (10) étant fixée au lévier (4) et le support (1) étant pivotable (17) autour d'un axe (18) perpendiculaire à l'axe de la broche (15) pour un usinage du type polaire.

2. Dispositif selon la revendication 1, **caractérisé en ce que** l'outil de coupe (6) est disposé sur le levier (4) à une position telle que le rapport entre le déplacement aimant/bobine et le déplacement de la pointe de l'outil de coupe est égal ou différent de 1:1.

3. Dispositif selon la revendication 2, **caractérisé en ce que** le rapport entre le déplacement aimant/bobine et le déplacement de la pointe de l'outil de coupe est égal à 3:1 environ.

4. Dispositif selon une des revendications 1 à 3, **caractérisé en ce que** le le support (1) est monté sur un tour.

5. Dispositif selon une des revendication 1 à 4, **caractérisé en ce que** le support (1) est monté sur un tour à mouvement XY, pour un usinage du type rectiligne.

6. Dispositif selon une des revendications 1 à 5, **caractérisé en ce que** le levier (4) est articulé (7) par rapport au support (1) à l'une de ses extrémités et le moteur électrique (10) est fixé à l'autre (8).

7. Dispositif selon une des revendications 1 à 6, **caractérisé en ce qu'**il comporte un capteur pour assurer le positionnement de l'outil de coupe (6) par rapport au support (1) ce capteur comprenant une partie immobile (14) au support (1) et une partie mobile (13) au levier (4).

## Claims

1. Device for the manufacture of contact lenses, more particularly of toroidal lenses, by cutting machining, comprising a spindle (15) for the attachment of a lens blank (16) and a cutting tool (6) that is adjustable with respect to the lens blank by means of an adjusting device, **characterised in that** the cutting tool (6) is disposed on a lever (4) that is hinged on a support (1) around a rotational axis (7), the lever (4) comprising a part of the adjusting device, including an electric motor with an electric coil (10) acting on a magnet (9), thereby creating a relative displacement of these two members (9, 10) with respect to each other and thus a displacement of the cutting tool (6), either the magnet (9) or the electric coil (10) being fixed to the lever (4), and the support (1) being capable of pivoting (17) around an axis (18) that is perpendicular to the axis of the spindle (15) for a machining of the polar type.

2. Device according to claim 1, **characterised in that** the cutting tool (6) is disposed on the lever (4) in such a position that the ratio between the displacement of the magnet/coil and the displacement of the point of the cutting tool is equal to or different from 1:1.

3. Device according to claim 2, **characterised in that** the ratio between the displacement of the magnet/coil and the displacement of the point of the cutting tool is equal to approx. 3:1.

4. Device according to one of claims 1 to 3, **characterised in that** the support (1) is mounted on a lathe.

5. Device according to one of claims 1 to 4, **characterised in that** the support (1) is mounted on a lathe with XY movement for a machining of the rectilinear type.

6. Device according to one of claims 1 to 5, **characterised in that** the lever (4) is hinged (7) on the support (1) by one of its ends and the electric motor (10) is fixed to the other (8).

7. Device according to one of claims 1 to 6, **characterised in that** it comprises a sensor for ensuring the positioning of the cutting tool (6) with respect to the support (1), the sensor including a stationary part (14) on the support (1) and a moving part (13) on the lever (4).

## Patentansprüche

1. Vorrichtung zur Herstellung von Kontaktlinsen, insbesondere torischer Linsen, durch spanabhebende Bearbeitung, mit einer Spindel (15), an welcher ein Linsenrohling (16) anbringbar ist, und einem durch eine Einstelleinrichtung gegenüber dem Linsenrohling einstellbaren Schneidwerkzeug (6), **dadurch gekennzeichnet, dass** das Schneidwerkzeug (6) auf einem Hebel (4) angeordnet ist, der gegenüber einem Träger (1) um eine Schwenkachse (7) schwenkbar ist, wobei der Hebel (4) einen Teil der Einstelleinrichtung aufweist, mit einem Elektromotor, der eine elektrische Spule (10) aufweist, die auf einen Magneten (9) wirkt und so eine gegenseitige Verschiebung dieser Teile (9, 10) und somit eine Verschiebung des Schneidwerkzeugs (6) bewirkt, wobei entweder der Magnet (9) oder die elektrische Spule (10) am Hebel (4) befestigt ist und der Träger (1) für eine polare Bearbeitung um eine senkrecht zur Achse der Spindel (15) stehende Achse (18) schwenkbar (17) ist.

2. Vorrichtung nach Anspruch 1, **dadurch gekennzeichnet, dass** das Schneidwerkzeug (6) derart auf dem Hebel (4) angeordnet ist, dass das Verhältnis zwischen der Verschiebung des Magneten bzw. der Spule und der Verschiebung der Spitze des Schneidwerkzeugs gleich oder verschieden von 1:1 ist.

3. Vorrichtung nach Anspruch 2, **dadurch gekennzeichnet, dass** das Verhältnis zwischen der Verschiebung des Magneten bzw. der Spule und der Verschiebung der Spitze des Schneidwerkzeugs ungefähr 3:1 beträgt.

4. Vorrichtung nach einem der Ansprüche 1 bis 3, **dadurch gekennzeichnet, dass** der Träger (1) an einer Drehmaschine montiert ist.

5. Vorrichtung nach einem der Ansprüche 1 bis 4, **dadurch gekennzeichnet, dass** der Träger (1) für eine geradlinige Bearbeitung an einer XY-Drehmaschine montiert ist.

6. Vorrichtung nach einem der Ansprüche 1 bis 5, **dadurch gekennzeichnet, dass** der Hebel (4) mit einem Ende am Träger (1) angelenkt (7) und der Elektromotor (10) am anderen Ende (8) befestigt ist.

7. Vorrichtung nach einem der Ansprüche 1 bis 6, **dadurch gekennzeichnet, dass** die Vorrichtung einen Sensor zur Positionierung des Schneidwerkzeugs (6) gegenüber dem Träger (1) aufweist, wobei der Sensor einen festen Teil (14) am Träger (1) und einen beweglichen Teil (13) am Hebel (4) aufweist.
